# EUROPÄISCHE PATENTANMELDUNG

(11) **EP 4 516 652 A1**
(43) Veröffentlichungstag der Anmeldung: **05.03.2025**
(21) Anmeldenummer: 24192478.6
(22) Anmeldetag: 02.08.2024
(51) Int. Cl.: B62K 5/00, B60C 23/00, B62K 7/02

(54) **LASTENRAD**

(30) Priorität: 31.08.2023 DE 102023208336
(71) Anmelder: ContiTech Deutschland GmbH, 30175 Hannover (DE)
(72) Erfinder: Leinemann, Marc, 30175 Hannover (DE); Möllenbruck, Bernd, 30175 Hannover (DE); Gerami-Manesch, Bijan, 30175 Hannover (DE)
(74) Vertreter: Continental Corporation

(57) **Zusammenfassung**

Die vorliegende Erfindung betrifft ein Lastenrad (1) mit einem Fahrgestell (10) mit wenigstens zwei Rädern (11) und einem Chassis (12), welche mittels wenigstens einer Luftfeder (13) federnd miteinander verbunden sind, und mit einer Luftversorgungseinheit (2), welche ausgebildet und eingerichtet ist, die Luftfeder (13) mit Druckluft zu versorgen.

## Beschreibung

Die vorliegende Erfindung betrifft ein Lastenrad.

Zum Transport von Personen und auch Waren sind seit langem weltweit Fahrräder bekannt. Diese werden üblicherweise als Zweiräder ausgeführt und von der Muskelkraft des Benutzers als Fahrradfahrer angetrieben. Auch sind derartige Fahrräder bekannt, welche mittels eines elektrischen Motors angetrieben werden können. Derartige Elektrofahrräder werden auch als E-Bikes bezeichnet.

Um größere Mengen an Waren wie beispielsweise Post, Pakete und dergleichen oder auch wenigstens eine weitere Person, welche nicht zur Bewegung beiträgt, transportieren zu können, sind größere Fahrräder bekannt, welche als Lastenfahrrad oder Lastenrad bezeichnet werden. Auch sind Begriffe wie Transportrad oder Cargobike gebräuchlich. Lastenräder mit elektrischem Antrieb werden als Elektro-Lastenfahrrad bezeichnet. Hierunter wird ein Fahrrad oder ein einem Fahrrad gleichgestelltes Fahrzeug verstanden, welches dem Transport von Lasten oder Personen dient. Je nach Aufgabe und Einsatzgebiet sind sie mit verschiedenen An- und Aufbauten ausgerüstet.

Die DE 10 2021 116 326 B3 beschreibt ein Lastenfahrrad mit einem bodenseitigen Versteifungsrahmen. Der Versteifungsrahmen hat einen Querträger und einen mittleren Zentralträger, wobei letzterer in einem, bezüglich des Lastenfahrrads, vorderen Bereich vorhanden ist. Zwei Radträger des Versteifungsrahmens verlaufen parallel zum Zentralträger. Jeder der beiden Radträger hat einen eigenen, zwischen Seitenwänden eines Radträgers angeordneten Radnabenmotor. Hierdurch ist der Versteifungsrahmen verwindungssteifer ausgeführt. Der Radnabenmotor bildet nämlich eine Verbindung zwischen den Seitenwänden. Soll ein entsprechendes Lastenfahrrad mit einem bodenseitigen Versteifungsrahmen hergestellt werden, wird eine relative Verwindungssteifigkeit zweier Radträger des Rahmens zueinander durch Eigensteifigkeiten hergestellt, die durch einen in einem der Radträger angeordneten Antriebsmotor, z. B. einem Radnabenmotor hergestellt sind.

Die DE 10 2017 005 699 B3 beschreibt ein Transportfahrrad mit einem Rahmen und mindestens drei Rädern, wobei mindestens zwei Räder als in einer Richtung quer zu einer Fahrtrichtung des Transportfahrrades voneinander beabstandete Seitenräder ausgebildet sind, wobei das Transportfahrrad einen Ladebereich aufweist. Das Transportfahrrad weist zwei quer zur Fahrtrichtung voneinander beabstandete Seitenträger auf, die einen Laderaum mit einer Einfahröffnung als Ladebereich seitlich begrenzen, und die zwischen sich den Laderaum mit einer Einfahröffnung für das Einbringen einer Transportbox ausbilden, sowie ein Transportsystem umfassend das Transportfahrrad und eine in den Laderaum einbringbare Transportbox.

Die DE 10 2019 121 141 A1 beschreibt ein Transportfahrrad, das mittels Muskelkraft und bzw. oder mittels elektrischen Antrieb antreibbar ist, mit mindestens einem Aufnahmebereich, in oder an dem mindestens ein Wechselbehälter und bzw. oder eine Zusatzlast anordenbar oder angeordnet ist, und mit mindestens einem Fahrerbereich, der bezüglich der Fahrtrichtung des Transportfahrrads vor dem Aufnahmebereich angeordnet ist und der mindestens eine Sitzeinheit, eine Pedaleinheit, eine Lenkeinheit, ein zumindest den Fahrerbereich überfangendes Dachelement und ein den Fahrerbereich in Richtung Fahruntergrund zumindest bereichsweise begrenzendes Bodenmittel einer Bodeneinheit umfasst, wobei Bodenmittel und Dachelement zumindest bereichsweise einen Abstand zueinander aufweisen, der zumindest die Körpergröße einer Bedienperson umfasst.

In jedem Fall werden derartige Lastenräder bisher entweder mit Stahlfeder-Hydraulikdämpfern ausgerüstet oder gar nicht gefedert.

Bei vergleichsweise größeren Fahrzeugen wie beispielsweise Lastkraftwagen (Lkw) oder Omnibussen werden zur Dämpfung von Schwingungen Federungssysteme eingesetzt. Hierzu gehören auch die Luftfederungen, welche die Kompressibilität von Gasen und insbesondere von Luft ausnutzen.

Eine weit verbreitete Bauart einer Luftfederung sind Luftfedern mit konstantem Volumen in Regellage. In diesem Fall wird die Luft üblicherweise in einem Rollbalg eingeschlossen, welcher mit weiteren Beschlagteilen wie bei Straßenfahrzeugen mit einem Deckel oder einer Bördelplatte und einem Abrollkolben luftdicht verbunden ist. Dabei ist der Kolben sowohl mit dem unteren Ende des Rollbalgs verbunden als auch üblicherweise mit einer Achse bei Straßenfahrzeugen bzw. mit einem Fahrgestell bei Schienenfahrzeugen. Das obere Ende des Rollbalgs ist mit einem Deckel oder einer Bördelplatte verbunden, welche mit der Karosserie bzw. mit dem Chassis des Fahrzeugs verbunden ist. Bei Schienenfahrzeugen wird der Balg zwischen einer Gleitplatte oben und dem Kolben unten angeordnet.

Der Rollbalg ist über den Kolben gestülpt und rollt unter Druck auf diesem ab. Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten. Derartige Luftfedern werden bei verschiedenen Arten von Fahrzeugen wie insbesondere bei Straßenfahrzeugen wie insbesondere Lastkraftwagen, Anhänger und Omnibusse sowie Schienenfahrzeugen eingesetzt.

Der Betrieb von Luftfedern erfordert die Möglichkeit, die Druckluftmasse in den Federn zu kontrollieren. Bei Lastwechseln muss diese Druckluft entweder in die Luftfedern eingefüllt oder aus den Luftfedern abgelassen werden, um die Bauhöhe der Luftfeder zu erhalten.

In Nutzfahrzeugen wie Lkw und Bussen wird die Druckluft in einem Vorratsbehälter bereitgestellt, der von einem Kompressor befüllt wird. Der Kompressor ist in der Regel am Motor befestigt und wird betrieben, um ein definiertes Druckniveau im Vorratsbehälter aufrechtzuerhalten. Die Steuerung der Luftmasse in den Luftfedern erfolgt über Ventile, die zum Aufblasen aus dem Reservoir oder zum Entleeren in die Atmosphäre verwendet werden. Bei diesen Fahrzeugtypen wird die Druckluft nicht nur für den Betrieb der Luftfedern benötigt, sondern auch für wichtige Systeme wie das Bremssystem.

Bei leichten Anwendungen wie z. B. bei Lastenfahrrädern gibt es kein pneumatisches System mit zentralem Kompressor und Behälter, um die Konstruktion einfach zu halten und die Kosten zu begrenzen. Der Einsatz von Luftfedern in solchen Fahrzeugen ist vorteilhaft für Funktion und Komfort, erfordert aber eine eigene Druckluftversorgung.

Eine Aufgabe der vorliegenden Erfindung ist es, die Verwendung von Luftfedern auch bei Lastenrädern zu ermöglichen, um die Eigenschaften und Vorteile einer Luftfederung auch bei derartigen Fahrzeugen verfügbar zu machen. Dies soll insbesondere möglichst einfach, kostengünstig, bauraumsparend, gewichtssparend und bzw. oder flexibel einsetzbar erfolgen. Zumindest soll eine Alternative zu den bekannten Möglichkeiten geschaffen werden.

Die Aufgabe wird erfindungsgemäß durch ein Lastenrad sowie durch eine Luftversorgungseinheit mit den Merkmalen der unabhängigen Patentansprüche gelöst. Vorteilhafte Weiterbildungen sind in den Unteransprüchen beschrieben.

Somit betrifft die vorliegende Erfindung ein Lastenrad mit einem Fahrgestell mit wenigstens zwei Rädern und einem Chassis, welche mittels wenigstens einer Luftfeder federnd miteinander verbunden sind, und mit einer Luftversorgungseinheit, welche ausgebildet und eingerichtet ist, die Luftfeder mit Druckluft zu versorgen.

Somit kann eine Druckluftversorgung, sei es mittels Kompressors und bzw. oder sei es mittels Druckluftreservoir, zur Verfügung gestellt werden, um die wenigstens eine Luftfeder zu speisen und zu betreiben. Dabei kann die Luftversorgungseinheit, wie die Bezeichnung ausdrückt, als Einheit ausgebildet werden, um als Ganzes entwickelt, aufgebaut und in der Montage des Lastenrads gehandhabt zu werden. Dies kann die Umsetzung vereinfachen.

Gemäß einem Aspekt der Erfindung weist das Fahrgestell wenigstens drei Räder auf und das Fahrgestell und das Chassis sind mit wenigstens zwei Luftfedern federnd miteinander verbunden. Dies kann die Anwendung der Erfindung auf ein derartiges Lastenrad ermöglichen.

Gemäß einem weiteren Aspekt der Erfindung ist die Luftversorgungseinheit als in sich geschlossene Baugruppe ausgebildet, am Lastenrad angeordnet und luftführend mit der Luftfeder verbunden. Somit wird die Luftversorgungseinheit als Baugruppe separat hergestellt und dann als Ganzes bei einem Lastenrad montiert und angeschlossen. Dies kann die Ausbildung der Luftversorgungseinheit als separate Einheit ermöglichen, was insbesondere für die Montage bei einem Hersteller von Lastenrädern als Zukaufteil die Montage vereinfachen und beschleunigen kann.

Gemäß einem weiteren Aspekt der Erfindung wird die Luftversorgungseinheit nach außen von einem Gehäuse, vorzugsweise von einem Gehäusekasten, im Wesentlichen umschlossen, wobei das Gehäuse wenigstens einen Stromanschluss aufweist, welcher die Luftversorgungseinheit mit einer elektrischen Versorgungsleitung des Lastenrads verbindet, und wobei das Gehäuse wenigstens einen Luftauslass aufweist, welcher die Luftversorgungseinheit mit der Luftfeder verbindet. Dies kann eine konkrete Möglichkeit der Umsetzung darstellen.

Gemäß einem weiteren Aspekt der Erfindung weist die Luftversorgungseinheit einen Luftauslassschalter auf, welcher ausgebildet und eingerichtet ist, den Luftauslass zu schalten. Unter einem Schalter ist auch ein Taster oder dergleichen zu verstehen. Hierdurch kann ein entsprechender Luftauslass gesteuert bzw. geschaltet werden, um bei Bedarf Druckluft von der Luftversorgungseinheit zu erhalten. Dies kann eine manuelle Betätigung des Luftauslasses durch einen Benutzer ermöglichen.

Gemäß einem weiteren Aspekt der Erfindung weist die Luftversorgungseinheit ein Ventil auf, welches ausgebildet und eingerichtet ist, vom Luftauslassschalter betätigt zu werden, um den Luftauslass zu schalten. Dies kann eine konkrete Möglichkeit der Umsetzung darstellen.

Gemäß einem weiteren Aspekt der Erfindung weist die Luftversorgungseinheit ein Ventil auf, welches ausgebildet und eingerichtet ist, von einer Steuerungseinheit des Lastenrads betätigt zu werden, um den Luftauslass zu schalten. Dies kann eine automatische bzw. selbsttätige Betätigung des Luftauslasses seitens des Lastenrads ermöglichen.

Gemäß einem weiteren Aspekt der Erfindung weist die Luftversorgungseinheit eine Steuerungseinheit und ein Ventil auf, wobei die Steuerungseinheit der Luftversorgungseinheit ausgebildet und eingerichtet ist, den Luftauslass zu schalten. Dies kann eine automatische bzw. selbsttätige Betätigung des Luftauslasses seitens der Luftversorgungseinheit ermöglichen.

Gemäß einem weiteren Aspekt der Erfindung weist die Luftversorgungseinheit wenigstens einen Kompressor und bzw. oder einen Druckluftbehälter auf, welcher ausgebildet und eingerichtet ist, die Druckluft zur Verfügung zu stellen. Dies kann jeweils oder in Kombination eine konkrete Möglichkeit der Umsetzung darstellen.

Gemäß einem weiteren Aspekt der Erfindung weist die Luftversorgungseinheit eine Drossel auf, welche ausgebildet und eingerichtet ist, ein Entlüften der Druckluft zu verlangsamen. Dies kann eine Dosierbarkeit ermöglichen, dass beim Entlüften nicht zu viel Druckluft entlüftet wird, also eine feinere Einstellung möglich ist. Dies kann auch ein schlagartiges bzw. übermäßig schnelle Entlüften verhindern, was vom Benutzer akustisch als störend empfunden werden könnte.

Die Erfindung betrifft auch eine Luftversorgungseinheit zur Verwendung in einem Lastenrad wie zuvor beschrieben. Hierdurch kann eine Luftversorgungseinheit, insbesondere als separate und in sich geschlossene Baugruppe, zur Verfügung gestellt werden, um bei einem Lastenrad wie zuvor beschrieben verwendet zu werden. Mittels der erfindungsgemäßen Luftversorgungseinheit können die entsprechenden Eigenschaften und Vorteile bei einem Lastenrad umgesetzt und genutzt werden.

Mit anderen Worten beschreibt die Erfindung ein integriertes System von Kompressor und Ventilen, die dazu ausgelegt sind, die Luftmasse in den Luftfedern durch Aufblasen und Entleeren zu steuern. Es kann so konstruiert sein, dass es manuell über Schalter gesteuert wird oder dass es mit einem automatischen Steuerungssystem kombiniert wird. Das System ist so konzipiert, dass es mit elektrischer Energie aus dem Fahrzeug versorgt und an die Pneumatikleitungen für die Luftfedern angeschlossen werden kann.

Die erfindungsgemäße Luftfeder-Luftdämpfer-Einheit bietet gegenüber der konventionellen Stahlfeder-Hydraulikdämpfung der Lastenräder grundsätzliche Vorteile. So kann eine konstante Fahrhöhe bzw. eine einstellbare Federhöhe durch Absenken bzw. Liften erreicht werden. Der Komfort kann aufgrund der lastadaptiven Federungs- und Dämpfungseigenschaften erhöht werden. Gleichzeitig kann die Reibung minimiert werden, wodurch verbesserte NVH-Eigenschaften (Noise Vibration Harshness) hinsichtlich Ansprechverhalten und frequenzselektiver Dämpfung erreicht werden können.

Daraus ergeben sich für die Anwendung mehrere Vorteile. So können durch das deutlich verbesserte Komfortlevel Lastspitzen auf Fahrzeugstruktur, Ladung und Fahrer reduziert werden. Durch die gewonnenen Komfortvorteile können z.B. Reifen mit weniger Komfort und damit besseren Widerstandseigenschaften verwendet werden. Ggf. kann die Fahrzeugstruktur weniger robust und damit leichter bzw. kostengünstiger ausgelegt werden.

Durch die einstellbare Federungshöhe mit Absenk- bzw. Liftfunktion kann auf die Mitführung von Auffahrrampen zur Containeraufnahme verzichtet werden oder es können kürzere Auffahrrampen verwendet werden. Damit können Kosten, Gewicht und Bauraum bei gleichzeitiger Vereinfachung der Containeraufnahme eingespart werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Lastenrads;
- Fig. 2: eine perspektivische schematische Darstellung einer Luftfeder des Lastenrads der Fig. 1;
- Fig. 3: eine perspektivische schematische Darstellung zweier Luftfedern des Lastenrads der Fig. 1;
- Fig. 4: eine schematische Draufsicht auf eine geöffnete erfindungsgemäße Luftversorgungseinheit des Lastenrads der Fig. 1 bis 3;
- Fig. 5: eine seitliche Detailansicht der Luftversorgungseinheit der Fig. 4 mit Luftauslassschaltern;
- Fig. 6: eine seitliche Detailansicht der Luftversorgungseinheit der Fig. 4 mit Stromanschluss und Luftauslässen; und
- Fig. 7: einen pneumatischen Schaltplan der Luftversorgungseinheit der Fig. 4.

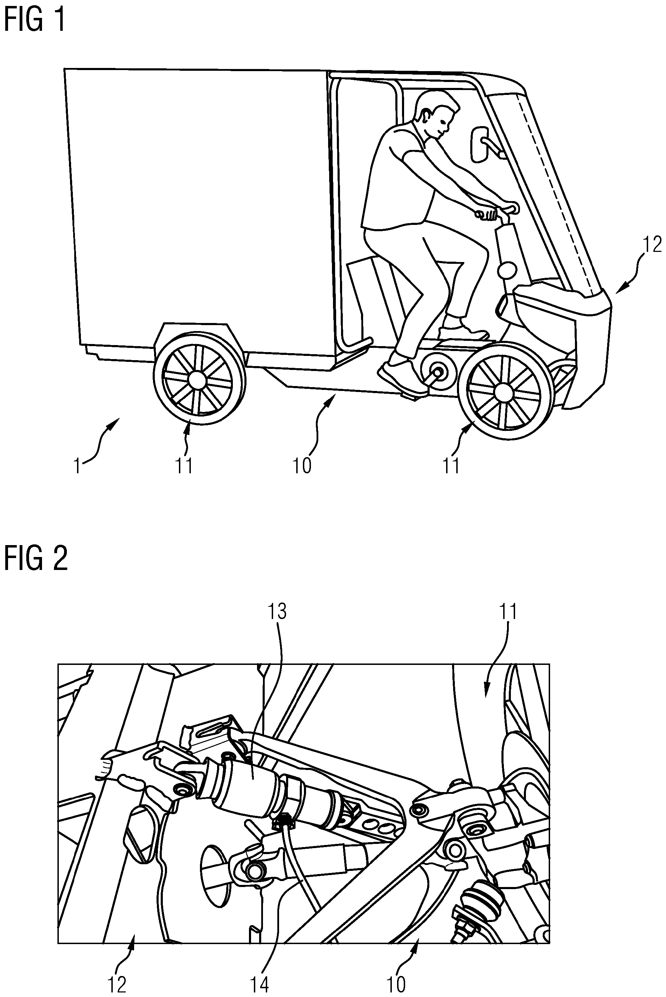

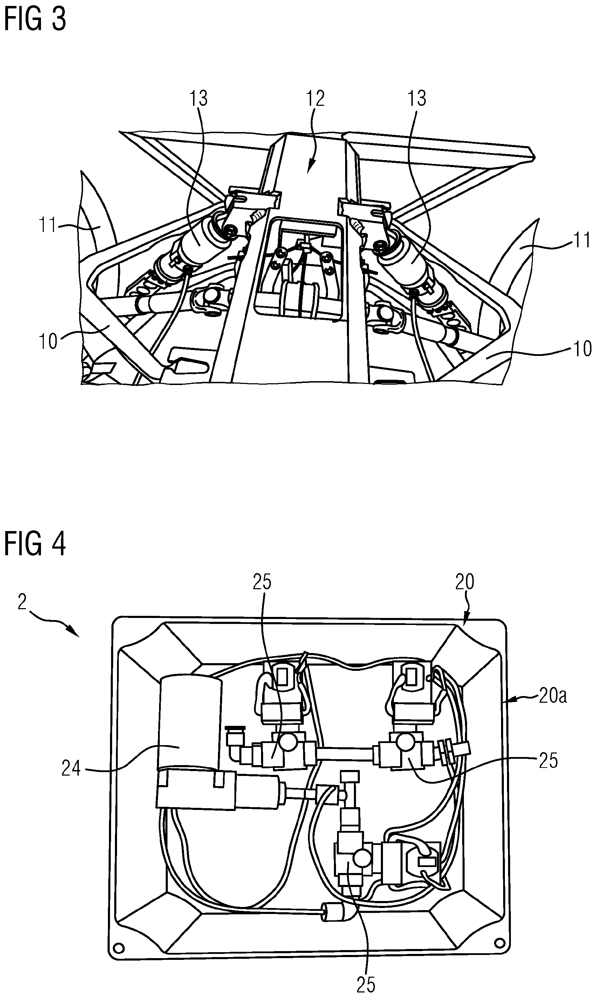

Fig. 1 zeigt eine perspektivische schematische Darstellung eines erfindungsgemäßen Lastenrads 1. Fig. 2 zeigt eine perspektivische schematische Darstellung einer Luftfeder 13 des Lastenrads 1 der Fig. 1. Fig. 3 zeigt eine perspektivische schematische Darstellung zweier Luftfedern 13 des Lastenrads 1 der Fig. 1.

Das betrachtete erfindungsgemäße Lastenrad 1 kann auch als Lastenfahrrad 1 bezeichnet werden. Das Lastenrad 1 weist ein Fahrgestell 10 mit vier Räder 11 auf. Das Lastenrad 1 weist ferner ein Chassis 12 auf, welches auch als Karosserie 12, als Gestell 12 oder als Rahmen 12 bezeichnet werden kann. Das Chassis 12 ist mittels zweier Luftfedern 13 federnd auf dem Fahrgestell 10 gelagert.

Die Luftfedern 13 sind mittels jeweils einer Luftzuführung 14 in Form einer Luftleitung 14 luftführend mit einer erfindungsgemäßen Luftversorgungseinheit 2 verbunden, um mittels der Luftversorgungseinheit 2 mit Druckluft gespeist zu werden. Die Luftversorgungseinheit 2 kann auch als Luftversorgungskasten 2 bezeichnet werden, vgl. Figur 4. Die Luftversorgungseinheit 2 ist als separate und in sich geschlossene Baugruppe ausgebildet und wird separat hergestellt, so dass die Luftversorgungseinheit 2 als Ganzes bei dem Lastenrad 1 verbaut bzw. montiert werden kann. Lediglich die Herstellung der entsprechenden Anschlüsse ist erforderlich, wie weiter unten noch näher beschrieben werden wird.

Die Luftversorgungseinheit 2 weist ein Gehäuse 20 in Form eines Kastengehäuses 20 auf, welches nach oben hin offen ausgebildet ist und somit den Innenraum des Gehäuses 20 bzw. der Luftversorgungseinheit 2 von oben zugänglich macht, siehe Fig. 4, um dort die entsprechenden Komponenten zu montieren und anzuschließen. Abschließend wird die Gehäuseöffnung 20a mit einem Deckel (nicht dargestellt) schmutz- und flüssigkeitsdicht verschlossen.

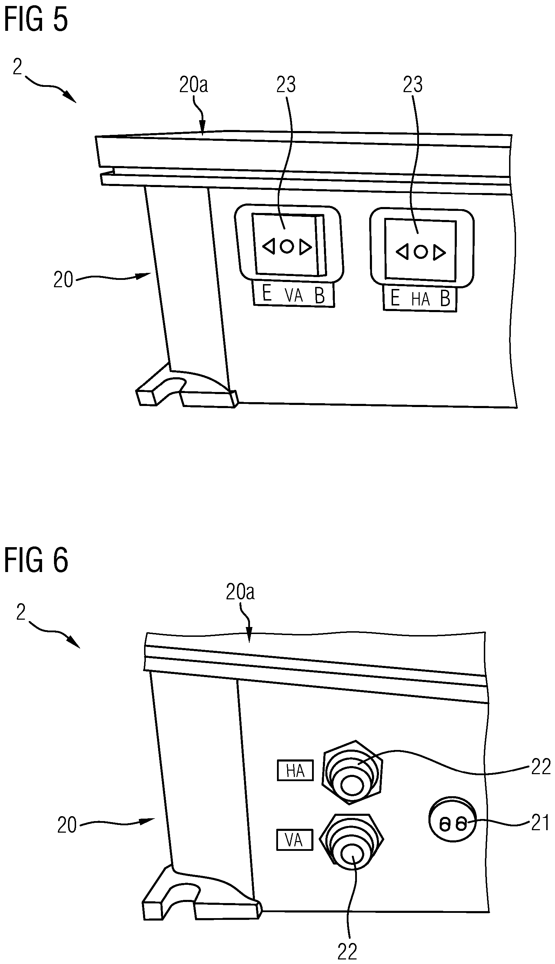

Die Luftversorgungseinheit 2 weist einen Stromanschluss 21 auf, siehe Fig. 6, um mit einem elektrischen Versorgungsnetz des Lastenrads 1 verbunden zu werden, so dass die elektrischen und elektronischen Komponenten der Luftversorgungseinheit 2 elektrisch versorgt werden können.

Die Luftversorgungseinheit 2 weist ferner zwei Luftauslässe 22 in Form von Luftauslassanschlüssen 22 auf, siehe Fig. 5, um die Druckluft nach außerhalb der Luftversorgungseinheit 2 zur Verfügung zu stellen. Das Auslassen von Druckluft kann pro Luftauslass 22 über jeweils einen Luftauslassschalter 23, siehe ebenfalls Fig. 5, vom Benutzer durch Betätigen erfolgen. Alternativ wäre auch eine selbsttätige Betätigung der Luftauslässe 23 durch eine Steuerungseinheit (nicht dargestellt) der Luftversorgungseinheit 2 oder durch eine Steuerungseinheit (nicht dargestellt) des Lastenrads 1 möglich.

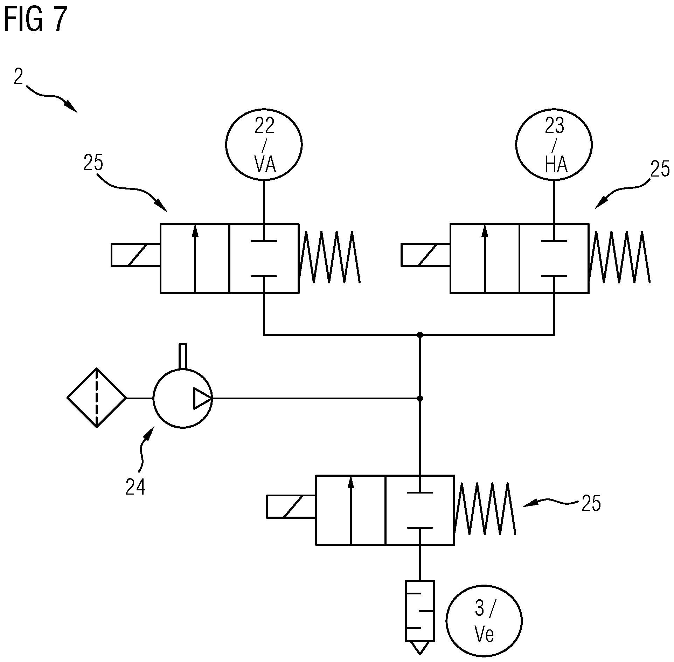

In jedem Fall kann die Druckluft mittels eines Kompressors 24 erzeugt und über Ventile 25 an die Luftauslässe 23 abgegeben werden, siehe Fig. 4 bzw. 7. Dabei kann auch eine Drossel verwendet werden, um ein Entlüften der Druckluft zu verlangsamen.

### Bezugszeichenliste (Teil der Beschreibung)

- 1: Lastenrad; Lastenfahrrad
- 10: Fahrgestell
- 11: Räder
- 12: Chassis; Karosserie; Gestell; Rahmen
- 13: Luftfeder
- 14: Luftzuführung; Luftleitung

- 2: Luftversorgungseinheit; Luftversorgungskasten
- 20: Gehäuse; Kastengehäuse
- 20a: Gehäuseöffnung
- 21: Stromanschluss
- 22: Luftauslässe; Luftauslassanschlüsse
- 23: Luftauslassschalter
- 24: Kompressor
- 25: Ventile

## Patentansprüche

1. Lastenrad (1) mit
einem Fahrgestell (10) mit wenigstens zwei Rädern (11) und
einem Chassis (12),
welche mittels wenigstens einer Luftfeder (13) federnd miteinander verbunden sind, und mit
einer Luftversorgungseinheit (2), welche ausgebildet und eingerichtet ist, die Luftfeder (13) mit Druckluft zu versorgen.

2. Lastenrad (1) nach Anspruch 1,
wobei das Fahrgestell (10) wenigstens drei Räder (11) aufweist und wobei das Fahrgestell (10) und das Chassis (12) mit wenigstens zwei Luftfedern (13) federnd miteinander verbunden sind.

3. Lastenrad (1) nach Anspruch 1 oder 2,
wobei die Luftversorgungseinheit (2) als in sich geschlossene Baugruppe ausgebildet, am Lastenrad (1) angeordnet und luftführend mit der Luftfeder (13) verbunden ist.

4. Lastenrad (1) nach einem der vorangehenden Ansprüche,
wobei die Luftversorgungseinheit (2) nach außen von einem Gehäuse (20), vorzugsweise von einem Gehäusekasten (20), im Wesentlichen umschlossen wird,
wobei das Gehäuse (20) wenigstens einen Stromanschluss (21) aufweist, welcher die Luftversorgungseinheit (2) mit einer elektrischen Versorgungsleitung des Lastenrads (1) verbindet, und
wobei das Gehäuse (20) wenigstens einen Luftauslass (22) aufweist, welcher die Luftversorgungseinheit (2) mit der Luftfeder (13) verbindet.

5. Lastenrad (1) nach Anspruch 4,
wobei die Luftversorgungseinheit (2) einen Luftauslassschalter (23) aufweist, welcher ausgebildet und eingerichtet ist, den Luftauslass (22) zu schalten.

6. Lastenrad (1) nach Anspruch 5,
wobei die Luftversorgungseinheit (2) ein Ventil (25) aufweist, welches ausgebildet und eingerichtet ist, vom Luftauslassschalter (23) betätigt zu werden, um den Luftauslass (22) zu schalten.

7. Lastenrad (1) nach Anspruch 4,
wobei die Luftversorgungseinheit (2) ein Ventil (25) aufweist, welches ausgebildet und eingerichtet ist, von einer Steuerungseinheit des Lastenrads (1) betätigt zu werden, um den Luftauslass (22) zu schalten.

8. Lastenrad (1) nach Anspruch 4,
wobei die Luftversorgungseinheit (2) eine Steuerungseinheit und ein Ventil (25) aufweist,
wobei die Steuerungseinheit der Luftversorgungseinheit (2) ausgebildet und eingerichtet ist, den Luftauslass (22) zu schalten.

9. Lastenrad (1) nach einem der vorangehenden Ansprüche,
wobei die Luftversorgungseinheit (2) wenigstens einen Kompressor (24) und/oder einen Druckluftbehälter aufweist, welcher ausgebildet und eingerichtet ist, die Druckluft zur Verfügung zu stellen.

10. Lastenrad (1) nach einem der vorangehenden Ansprüche,
wobei die Luftversorgungseinheit (2) eine Drossel aufweist, welche ausgebildet und eingerichtet ist, ein Entlüften der Druckluft zu verlangsamen.

11. Luftversorgungseinheit (2) zur Verwendung in einem Lastenrad (1) nach einem der vorangehenden Ansprüche.
